# EUROPEAN PATENT SPECIFICATION

(11) **EP 0 791 429 B1**
(45) Date of publication and mention of the grant of the patent: **26.07.2000**
(21) Application number: 97101205.9
(22) Date of filing: 27.01.1997
(51) Int. Cl.: B23Q 17/24

(54) **Method for marking a surface portion of an object to be marked and automatic marking machine for implementing the method, particularly for keys and lock cylinders**
Verfahren zum Markieren einer Teiloberfläche eines zu markierenden Gegenstandes und automatische Markierungsvorrichtung zum Durchführen des Verfahrens, insbesondere für Schlüssel und Schlosszylinder
Procédé pour marquer une partie d'une surface d'un article à marquer et machine automatique de marquage pour la mise en oeuvre du procédé, en particulier pour clefs et cylindres de serrures

(30) Priority: 23.02.1996 IT VE960004
(43) Date of publication of application: 27.08.1997
(73) Proprietor: SILCA S.p.A., I-31029 Vittorio Veneto (Treviso) (IT)
(72) Inventor: Foscan, Eros, 31010 - Mareno di Piave (IT); Pacenzia, Stefano, 31029 - Vittorio Veneto (IT); Rossetto, Luigi, 30020 - Noventa di Piave (IT)
(74) Representative: Piovesana, Paolo

(56) References cited:
- FR-A- 2 343 555
- FR-A- 2 707 017
- US-A- 2 109 849
- US-A- 3 565 530
- US-A- 3 651 842
- US-A- 5 305 531

## Description

This invention relates to a method for marking a surface portion of an object to be marked, and an automatic marking machine for implementing the method, particularly for keys and lock cylinders.

Marking keys and lock cylinders with writing, signs, designs, numbers etc. is a technique much used by key duplicators because it enables them to identify their own products and/or to engrave them with publicity. This technique is also used by lock manufacturers to indicate in code the key or cylinder pattern so as to be able to reconstruct this pattern merely from the code number, even though the original is not available.

Marking machines are known provided with automatic mechanisms, in which the marking region can be determined by defining the two coordinates of the initial point of the region.

These machines have however numerous drawbacks, and in particular:
- laboriousness in identifying these coordinates because of the need to make measurements directly on the surface on which the object to be marked is placed,
- substantial impossibility of identifying the entire region to be marked before the actual marking, because the point at which the marking is to commence provides no information on its extent or centre,
- a repeat of the same drawbacks for each change of shape or size of the marking.

Marking machines provided with an automatic mechanism are also known in which the tool is positioned manually on the point at which the marking is to begin, and then proceeds automatically for all the points to be marked.

However these machines have the aforedescribed drawbacks plus the need to manually initiate the marking to define the commencement point.

Finally, marking machines provided with an automatic mechanism are known which not only mark the starting point but also define the entire region to be marked. However in addition to the aforesaid drawbacks these machines suffer from further problems, and in particular:
- the non-usability of the first piece, in that its "trial" marking may not correspond to the effective marking,
- the need to exactly position the subsequent pieces to be marked.

FR-A-2.707.017 relates to an apparatus that projects the contour of an image generated by a computer on its display onto a plane just by keeping into account the scale ratio between the initial image and the projected image.

An object of the invention is to mark surfaces in general, and in particular the metal surface of keys and cylinders, with initial identification of the region concerned.

A further object is to identify the region to be marked in a simple and rapid manner.

A further object is to display on the object surface the region to be marked in real dimensions.

A further object is to identify the region to be marked without damaging the sample used to achieve this identification.

All these objects and further ones which will result from the following description are attained according to the invention through the method as described in claim 1.

The invention also forsees the provision of an automatic marking machine as described in independent claim 6.

A preferred embodiment of the present invention is described hereinafter with reference to the accompanying drawings, in which:

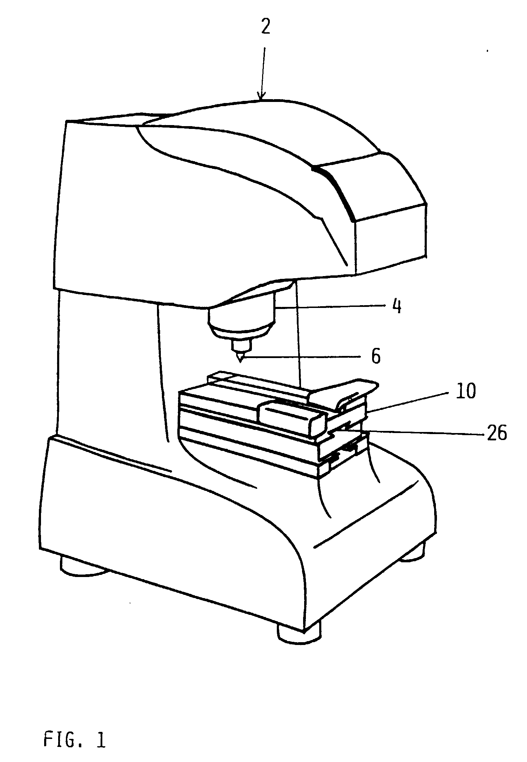

- Figure 1: is a perspective view of a punching machine according to the invention,

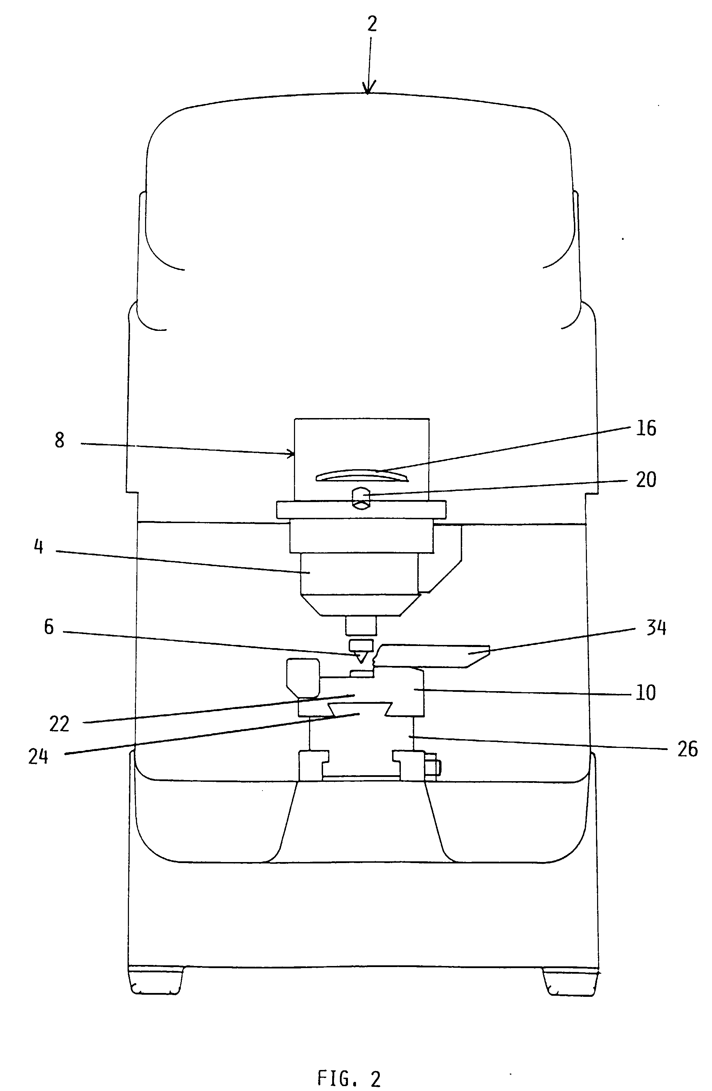

- Figure 2: is a front view thereof,
- Figure 3: is a side view thereof,

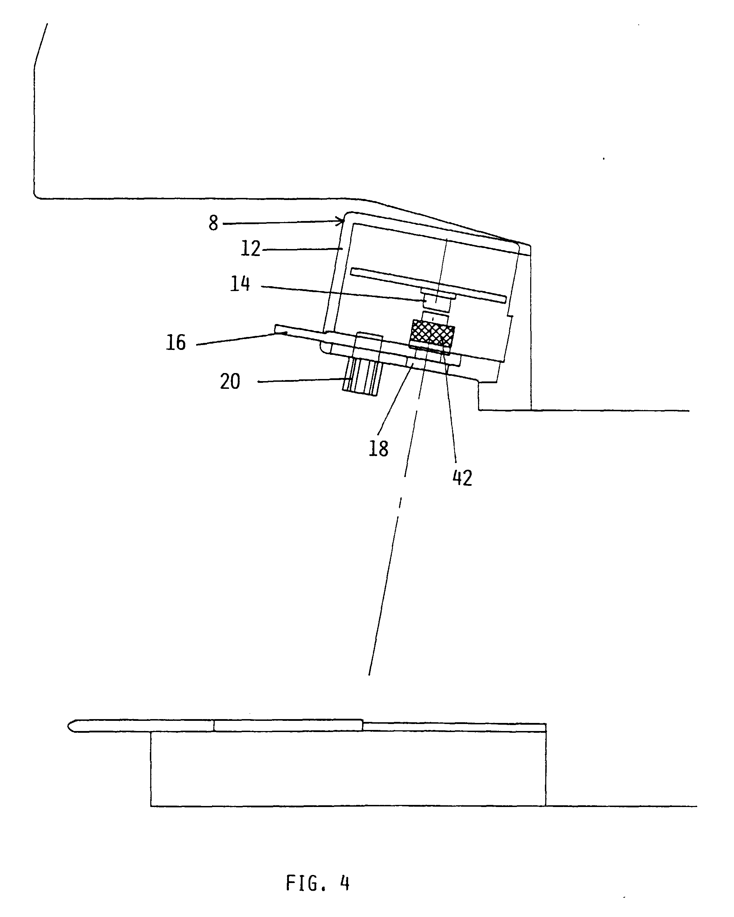

- Figure 4: is a side view of its optical system,
- Figure 5: is an enlarged front view of this latter,
- Figure 6: is a front view of its key clamp,
- Figure 7: is a plan view thereof on the line VII-VII of Figure 6,
- Figure 8: is a front view of its clamp for round cylinders,
- Figure 9: is a plan view thereof taken on the line IX-IX of Figure 8,
- Figure 10: is a front view of its clamp for cylinders of European type,
- Figure 11: is a plan view thereof taken on the line XI-XI of Figure 10.

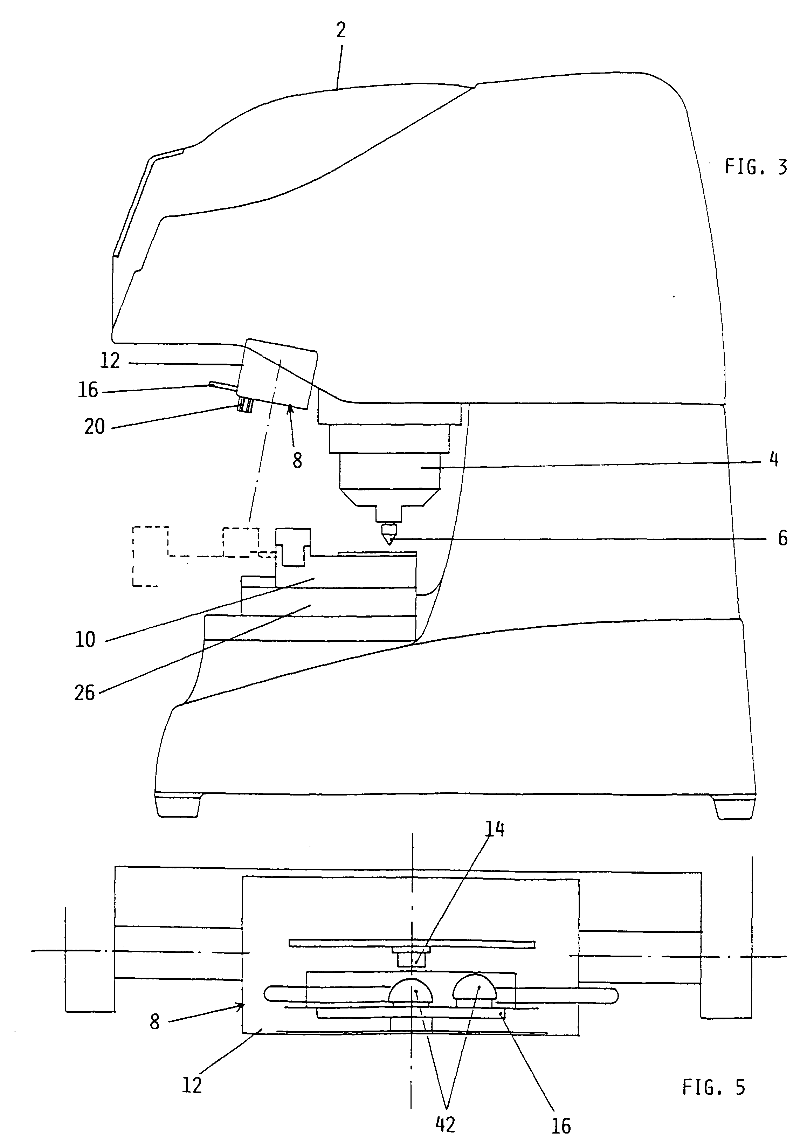

As can be seen from the figures, the marking machine according to the invention, which in the illustrated embodiment consists of a punching machine, comprises a structure 2 supporting a punching device 4 provided with a marking tool in the form of an interchangeable punch 6, an optical aiming device rigid with the punching device 4 and indicated overall by 8, and a clamp 10 movable between two fixed end positions, namely a working position below the punching device 4 and indicated by full lines in Figure 3, and a more outer aiming position indicated by dashed lines in Figure 3.

The aiming device 8 is contained in a box 12 and comprises a light source 14 which can specifically be a laser source, and a disc 16 positioned below the light source 14 and comprising, within a circular rim, windows or diaphragms 18 reproducing geometrical motifs of different form and dimensions.

The disc 16, which is removably fixed to the box 12 by a screw 20, has its edge projecting outwards from the box 12 to enable it to be rotated manually by the operator, who can hence easily and quickly select the required window 18 from those provided in the disc 16. This disc 16 is interchangeable with others having diaphragms 18 of different form and/or dimensions, in order to increase the number of options, as will be apparent hereinafter. The punching device 4 is provided with traditional drive members, which are housed within the structure 2 and are controlled by a control unit with a microprocessor, which controls the movements on the basis of the predetermined punching program.

The clamp 10, the purpose of which is to lock the object to be punched and is hence chosen on the basis of the shape thereof, lowerly comprises a dovetail groove 22, cooperating with a corresponding rib 24 provided on an underlying guide 26 applied to the structure 2.

Independently of the shape of the clamp 10, on its upper surface there is applied a matted glass plate 28 fixed on a shaft 30 pivoted to the clamp and comprising at its end a knob 32. This glass plate is used with reflecting objects, for the purpose of diffusing the incident beam and hence make the light beam-illuminated surface of the object to be punched visible from any direction. As will be more apparent hereinafter, the glass plate 28 is positioned above the object to be punched during the aiming state, and is removed therefore by being rotated by the knob 32 so as to leave the object free during punching.

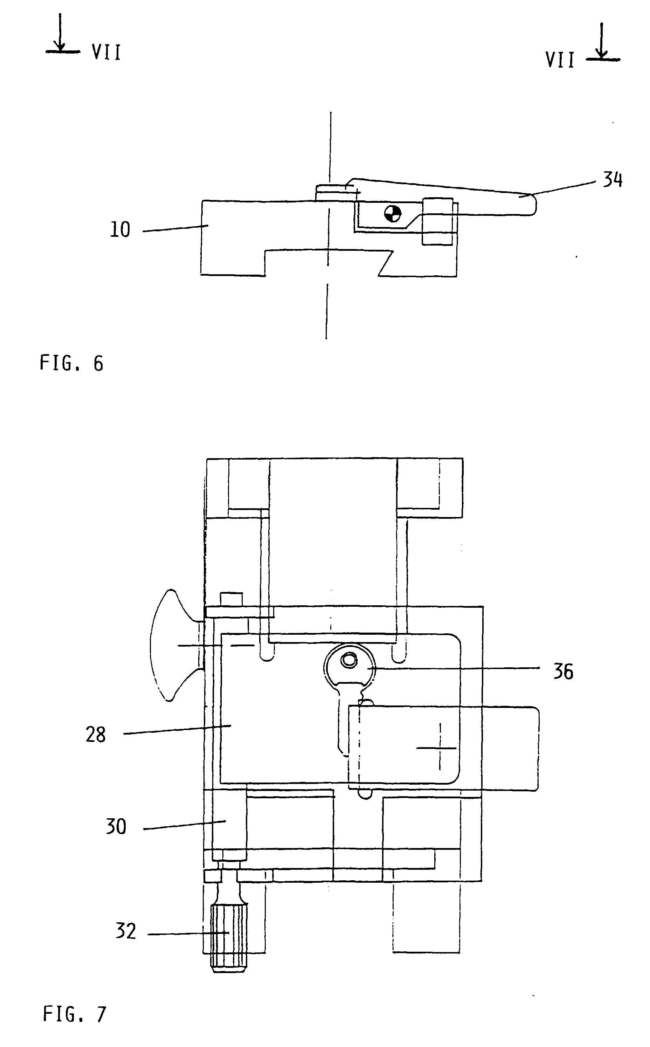

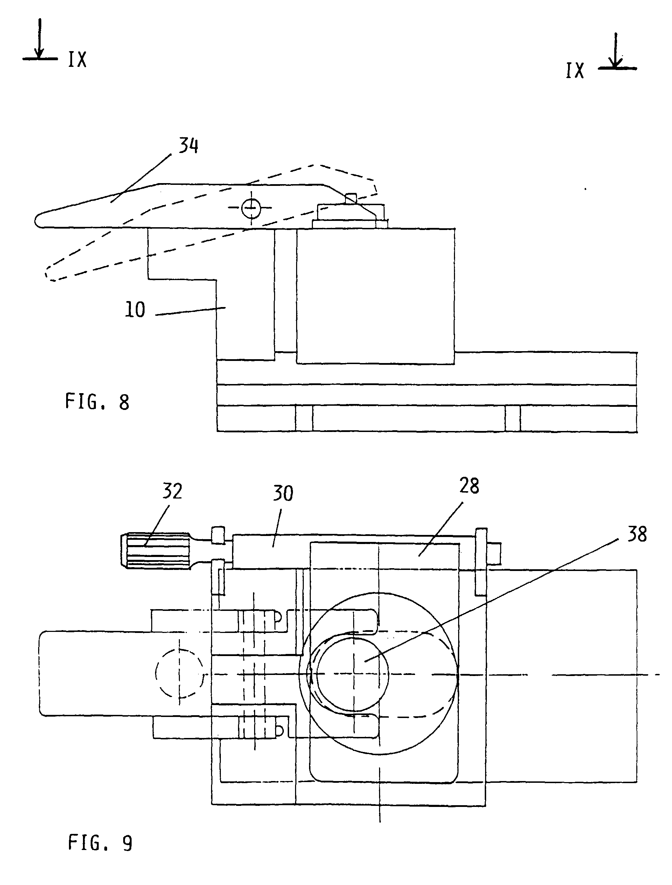

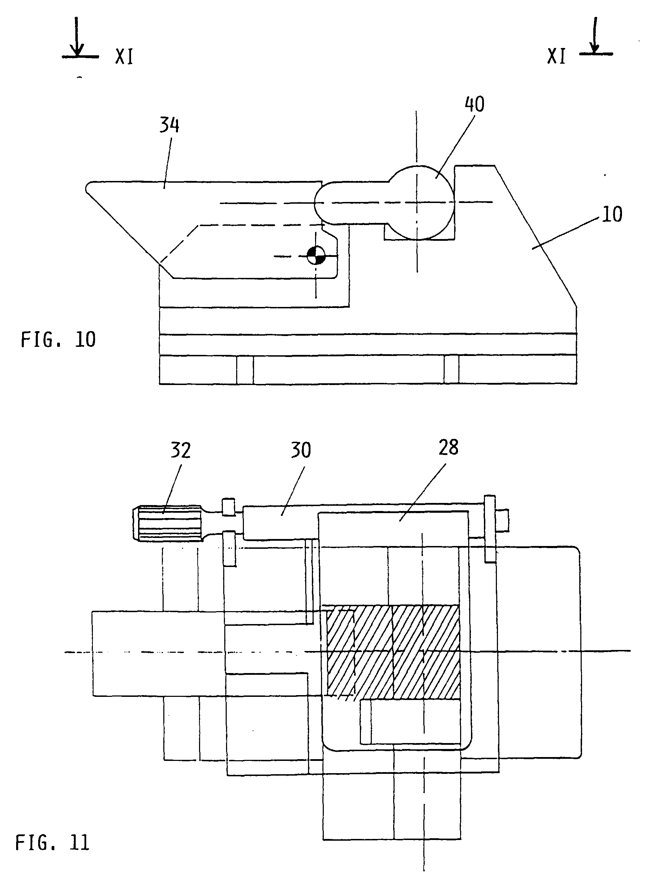

Figures 7 and 11 show different clamps 10 for different objects to be punched, these being retained on the body of the clamp by a spring-loaded locking lever 34. Specifically, Figures 6 and 7 show a clamp 10 for locking a key 36; Figures 8 and 9 show a clam 10 for locking a round cylinder 38; and Figures 10 and 11 show a clamp 10 for locking a cylinder of European type. It is preferable to use clamps which maintain the object punching surface always at the same level.

The operation of the punching machine according to the invention is as follows:
the operator firstly extracts the clamp 10 by sliding it along the guide 16 until it reaches its end-of-travel position, at which the laser source 14 is automatically operated. The operator then turns the rim of the disc 16 to select that diaphragm 18 of form and dimensions corresponding to the region of the object to be punched, for example the key 36. In this manner the light beam emitted by the laser source 14 traverses the selected diaphragm 18 and illuminates the surface of the key 36. If this surface is a reflecting surface it is advisable to cover the object with the matted glass plate 28 as already stated.

If the illuminated portion of the surface to be punched, although being correct in terms of form and dimensions, is not correctly centered within the head of the key 36, the operator can centre it, for example via a keyboard associated with the microprocessor, which shifts the unit formed by the aiming 8 and the punching device 4 rigid with it.

Having made this adjustment, the operator removes the glass plate 28 from the key 36, causes the control unit to memorize the parameters relative to this adjustment and then urges the clamp 10 along its guide 26 until it reaches the opposite end of the guide, this corresponding to the correct punching position. This operation causes automatic extinguishing of the laser source 14. When the clamp 10 has reached its punching position, either a manual command fed by the operator or an automatic command results in the commencement of punching on the basis of a series of marking instructions previously fed to the controlling microprocessor.

When the punching procedure has started, it continues automatically in that at each punching step the microprocessor moves the punch 6 into the next position on the basis of the selected program.

When the key 36 has been punched it is removed and replaced by another, on which the operating cycle is repeated on the basis of the previously memorized operating parameters and the selected punching program.

Completely automatic operation is also possible, comprising automatic loading of the successive keys 36, automatic operation of the locking lever 34 of the clamp 10 and automatic movement of the clamp 10 along its slide guide 26.

If, as in the aforedescribed case, a laser source 14 is used, the light beam of which has a small angular aperture, it is possible that with large-dimension diaphragms 18 the distance between the light source 14 and the diaphragm is too small to allow illumination of the entire region of the object to be punched. In this case, the aiming device 8 comprises one or more interchangeable lenses 42, the purpose of which is to diverge the light beam emitted by the source 14, to cause it to embrace the entire diaphragm 18.

From the aforegoing it is apparent that the method of the invention and its implementing machine have numerous advantages, and in particular:
- they facilitate identification of the marking region,
- they reduce the time required for identifying the marking region,
- they eliminate the need for using micrometers or other measuring instruments for determining the extent of the corrections to be made to define the correct marking region,
- they enable the marking region to be positioned at various points of the object,
- they do not cause any damage to samples used to define the correct marking region,
- they allow completely automatic operation via a computer, which can be used for several machines.

## Claims

1. A method for marking a surface portion of an object to be marked, characterized by the following steps:
- predetermining, in relation to the available surface of the object to be marked, the form and/or the extent of that surface portion that will be marked (36,38,40),
- selecting a diaphragm (18) of form and dimensions corresponding to the form and dimensions of said surface portion,
- projecting a light beam onto said surface through said diaphragm (18) to define the surface portion to be marked,
- modifying, if necessary, the position of an aiming device (8) which projects said light beams and which is rigid with a marking device (4) provided with a marking tool (6) relative to said surface, in order to redefine the exact region to be marked in said surface,
- establishing a correlation between the position of said defined surface and the position of said marking tool (6),
- causing said tool (6) to implement the marking within said previously defined surface portion.

2. A method as claimed in claim 1, characterised by projecting a light beam generated by a laser source onto the surface to be marked.

3. A method as claimed in claim 1, characterised by diverging the light beam before causing it to pass through said diaphragm (18).

4. A method as claimed in claim 2, characterised by temporarily superposing on the object to be marked a member for diffusing the laser light beam emitted by said light source (14).

5. A method as claimed in claim 1, characterised in that the entire marking stage is controlled by a control unit.

6. An automatic machine, particularly for keys and lock cylinders, for implementing the method in accordance with one or more of claims 1 to 5, comprising a clamp (10) for locking the object to be marked (36, 38, 40) and a marking device (4) provided with a marking tool (6),
characterised by further comprising:
- an optical aiming device (8) with a light source (14) and with more than one diaphragm (18) through which the light source feeds a light beam onto said object (36, 38, 40) to optically define the portion to be marked, said optical device (8) being rigid with the marking device (4),
- means for moving the aiming device (8) relative to the object to be marked which is closed in the clamp,
- means for correlating the position of the marking tool (6) with the position of said defined portion, and
- a unit for controlling the entire marking process.

7. A machine as claimed in claim 6, characterised in that the light source (14) is a laser source.

8. A machine as claimed in claim 6 characterised in that the optical aiming device (8) comprises a disc (16) which presents a plurality of different diaphragms (18) and of which the angular position can be adjusted to cause the light source (14) to face the selected diaphragm (18).

9. A machine as claimed in claim 8, characterised in that the disc (16) is interchangeable.

10. A machine as claimed in claim 8, characterised in that the optical aiming device (8) is housed within a box (12) from which there emerges a portion of the edge of the disc (16) to enable it to be manually rotated.

11. A machine as claimed in claim 6, characterised in that the optical aiming device (8) comprises at least one lens (42) interposed between the light source (14) and the diaphragm (18).

12. A machine as claimed in claim 11, characterised in that the optical aiming device (8) comprises several lenses (42) which can be individually made to face the light source (14).

13. A machine as claimed in claim 6 characterised in that the clamp (10) is movable between two end positions, the axes of the light beam and of the marking tool (6) being at an angle apart such that they interfere with the object to be marked (36, 38, 40) in correspondence with said end portions of said clamp (10) respectively.

14. A machine as claimed in claim 13, characterised in that the clamp (10) is mounted on a grooved guide (26).

15. A machine as claimed in claim 6, characterised in that the clamp (10) is provided with a spring-loaded locking lever (34) for retaining the object to be marked (36, 38, 40).

16. A machine as claimed in claim 7, characterised in that the clamp (10) is provided with a glass diffuser plate (28) movable between a position in which it covers, and a position in which it uncovers, the object to be marked (36, 38, 40).

17. A machine as claimed in claim 16, characterised in that the glass plate (28) is hinged to the body of the clamp (10).

## Patentansprüche

1. Verfahren zum Markieren eines Oberflächenbereichs eines zu markierenden Gegenstandes, gekennzeichnet durch die folgenden Schritte:
- Voreinstellung der Form und/oder des Ausmaßes des zu markierenden Oberflächenbereichs (36, 28, 40) bezüglich der verfügbaren Oberfläche des zu markierenden Gegenstandes,
- Auswahl einer Blende (18) mit einer Form und Abmessungen entsprechend der Form und den Abmessungen des Oberflächenbereichs,
- Bestrahlung der Oberfläche mit einem Lichtstrahl durch die Blende (18) zur Bestimmung des zu markierenden Oberflächenbereichs,
- falls nötig, Änderung der Stellung einer Zieleinrichtung (8) zur Neubestimmung des genauen, zu markierenden Oberflächenbereichs, wobei die Zieleinrichtung (8) die Lichtstrahlen abstrahlt und mit einer Markierungsvorrichtung (4) starr verbunden ist, die ein Markierungswerkzeug (6) relativ zu der Oberfläche aufweist,
- Erzeugung einer Wechselbeziehung zwischen der Stellung der vorbestimmten Oberfläche und der Stellung des Markierungswerkzeuges (6),
- Durchführung der Markierung mit dem Werkzeug (6) innerhalb des vorherbestimmten Oberflächenbereichs.

2. Verfahren nach Anspruch 1, dadurch gekennzeichnet, dass ein von einer Laserquelle erzeugter Lichtstrahl auf die zu markierende Oberfläche gestrahlt wird.

3. Verfahren nach Anspruch 1, dadurch gekennzeichnet, dass der Lichtstrahl bevor, er die Blende (18) durchläuft, divergierend abgelenkt wird.

4. Verfahren nach Anspruch 2, dadurch gekennzeichnet, dass der zu markierende Gegenstand zeitweise von einem Mittel überdeckt wird, das den von der Lichtquelle (14) abgestrahlten Laserlichtstrahl zerstreut.

5. Verfahren nach Anspruch 1, dadurch gekennzeichnet, dass der gesamte Markierungsvorgang durch eine Steuereinheit gesteuert wird.

6. Automatische Vorrichtung, insbesondere für Schlüssel und Schlosszylinder, zur Durchführung des Verfahrens entsprechend einem oder mehreren der Ansprüche 1 bis 5, die eine Klemme (10) zum Einspannen des zu markierenden Gegenstandes (36, 38, 40) und eine Markierungsvorrichtung (4) mit einem Markierungswerkzeug (6) aufweist, dadurch gekennzeichnet, dass sie desweiteren aufweist:
- eine optische Zieleinrichtung (8) mit einer Lichtquelle (14) und mit mehr als einer Blende (18) durch die die Lichtquelle einen Lichtstrahl zur optischen Bestimmung des zu markierenden Bereichs auf den Gegenstand (36, 38, 40) lenkt, wobei die optische Einrichtung (8) starr mit der Markierungsvorrichtung (4) verbunden ist,
- Mittel zum Bewegen der Zieleinrichtung (8) relativ zu dem zu markierenden Gegenstand, der mit der Klemme eingespannt ist,
- Mittel zum Erzeugen einer Wechselbeziehung der Stellung des Markierungswerkzeuges (6) mit der Stellung des vorbestimmten Bereichs und
- eine Steuereinheit für den gesamten Markierungsvorgang.

7. Vorrichtung nach Anspruch 6, dadurch gekennzeichnet, dass die Lichtquelle (14) eine Laserquelle ist.

8. Vorrichtung nach Anspruch 6, dadurch gekennzeichnet, dass die optische Zieleinrichtung (8) eine Platte (16) aufweist, die eine Vielzahl verschiedener Blenden (18) vorweist und deren Winkelstellung so einstellbar ist, dass die Lichtquelle (14) der ausgewählten Blende (18) gegenüberliegt.

9. Vorrichtung nach Anspruch 8, dadurch gekennzeichnet, dass die Platte (16) austauschbar ist.

10. Vorrichtung nach Anspruch 8, dadurch gekennzeichnet, dass die optische Zieleinrichtung (8) in einem Gehäuse (12) untergebracht ist, aus dem zum manuellen Drehen der Platte (16) ein Teil des Randes der Platte (16) herausragt.

11. Vorrichtung nach Anspruch 6, dadurch gekennzeichnet, dass die optische Zieleinrichtung (8) zumindest eine zwischen der Lichtquelle (14) und der Blende (18) eingesetzte Linse (42) aufweist.

12. Vorrichtung nach Anspruch 11, dadurch gekennzeichnet, dass die optische Zieleinrichtung (8) mehrere Linsen (42) aufweist, die einzeln gegenüber der Lichtquelle (14) einstellbar sind.

13. Vorrichtung nach Anspruch 6, dadurch gekennzeichnet, dass die Klemme (10) zwischen zwei Endstellungen beweglich ist, wobei die Achsen des Lichtstrahls und des Markierungswerkzeuges (6) einen Winkel derart zueinander bilden, dass sie sich entsprechend den jeweiligen Endstellungen der Klemme (10) mit dem zu markierenden Gegenstand (36, 38, 40) überlagern.

14. Vorrichtung nach Anspruch 13, dadurch gekennzeichnet, dass die Klemme (10) auf einer Rillenführung (26) angebracht ist.

15. Vorrichtung nach Anspruch 6, dadurch gekennzeichnet, dass zum Festhalten des zu markierenden Gegenstandes (26, 28, 40) an der Klemme (10) ein Einspannhebel unter Federspannung (34) vorgesehen ist.

16. Vorrichtung nach Anspruch 7, dadurch gekennzeichnet, dass an der Klemme (10) eine Zerstreuungsglasplatte (28) vorgesehen ist, die zwischen einer den zu markierenden Gegenstand (36, 3, 40) abdeckenden Stellung und einer diesen nicht abdeckenden Stellung beweglich ist.

17. Vorrichtung nach Anspruch 16, dadurch gekennzeichnet, dass die Glasplatte (28) gelenkig an den Körper der Klemme (10) angebracht ist.

## Revendications

1. Un procédé de marquage d'une partie de surface d'un objet à marquer, caractérisé par les étapes suivantes :
- prédéterminer par rapport à la surface disponible de l'objet à marquer, la forme et/ou l'étendue de la partie de surface qui sera marquée (36, 38, 40),
- choisir un diaphragme (18) de forme et de dimensions correspondant à la forme et aux dimensions de ladite partie de surface,
- projeter un faisceau lumineux sur ladite surface à travers ledit diaphragme (18) pour définir la partie de surface à marquer,
- modifier, si nécessaire, la position d'un dispositif de visée (8) qui projette lesdits faisceaux lumineux et qui est solidaire d'un dispositif équipé d'un outil de marquage (6) par rapport à ladite surface, pour redéfinir la région exacte à marquer dans ladite surface,
- établir une corrélation entre la position de la dite surface définie et la position dudit outil de marquage (6),
- commander ledit outil (6) pour réaliser le marquage dans ladite partie de surface précédemment définie.

2. Un procédé comme revendiqué en revendication 1, caractérisé par la projection d'un faisceau lumineux généré par une source laser sur la surface à marquer.

3. Un procédé comme revendiqué en revendication 1, caractérisé par la divergence du faisceau lumineux avant son passage à travers ledit diaphragme (18).

4. Un procédé comme revendiqué en revendication 2, caractérisé par la superposition temporaire sur l'objet à marquer d'un élément de diffusion du faisceau lumineux laser émis par ladite source lumineuse (14).

5. Un procédé comme revendiqué en revendication 1, caractérisé en ce que toute l'étape de marquage est commandée par une unité de contrôle.

6. Une machine automatique, en particulier pour des clés et des cylindres de serrure, pour exécuter le procédé selon une ou plusieurs des revendications 1 à 5, comprenant une pince (10) pour bloquer l'objet à marquer (36, 38, 40) et un dispositif de marquage (4), équipé d'un outil de marquage (6),
caractérisée en ce qu'elle comprend également :
- un dispositif de visée optique (8) avec une source lumineuse (14) et avec plus d'un diaphragme (18) à travers lequel la source lumineuse envoie un faisceau lumineux sur ledit objet (36, 38, 40) pour définir optiquement la partie à marquer, ledit dispositif optique (8) étant solidaire du dispositif de marquage (4),
- des moyens de déplacement du dispositif de visée (8) par rapport à l'objet à marquer qui est enfermé dans la pince,
- des moyens pour corréler la position d'un outil de marquage (6) avec la position de ladite partie définie, et
- une unité de commande de tout le procédé de marquage.

7. Une machine comme revendiquée en revendication 6, caractérisée en ce que la source lumineuse (14) est une source laser.

8. Une machine comme revendiquée en revendication 6, caractérisée en ce que le dispositif de visée optique (8) comprend un disque qui comporte une pluralité de diaphragmes différents (18) et dont la position angulaire peut être ajustée pour que la source lumineuse (14) soit en face du diaphragme sélectionné (18).

9. Une machine comme revendiquée en revendication 8, caractérisée en ce que le disque (16) est interchangeable.

10. Une machine comme revendiquée en revendication 8, caractérisée en ce que le dispositif optique de visée (8) est logé à l'intérieur d'une boîte (12) dont émerge une partie du bord du disque (16) pour permettre son entraînement manuel en rotation.

11. Une machine comme revendiquée en revendication 6, caractérisée en ce que le dispositif de visée optique (8) comprend au moins une lentille ou un objectif (42) interposé entre la source lumineuse (14) et le diaphragme (18).

12. Une machine comme revendiquée en revendication 11, caractérisée en ce que le dispositif de visée optique (8) comprend plusieurs lentilles ou objectifs (42) qui peuvent être individuellement amenés en face de la source lumineuse (14).

13. Une machine comme revendiquée en revendication 6, caractérisée en ce que la pince (10) est mobile entre deux positions extrêmes, les axes du faisceau lumineux et de l'outil de marquage (6) étant espacés d'un angle tel qu'ils interfèrent avec l'objet à marquer (36, 38, 40) en correspondance avec lesdites positions extrêmes de ladite pince (10), respectivement.

14. Une machine comme revendiquée en revendication 13, caractérisée en ce que la pince (10) est montée sur un guide rainuré (26).

15. Une machine comme revendiquée en revendication 6, caractérisée en ce que la pince (10) est pourvue d'un levier de verrouillage (34) chargé par un ressort pour retenir l'objet à marquer (36, 38, 40).

16. Une machine comme revendiquée en revendication 7, caractérisée en ce que la pince (10) est équipée d'une plaque de diffusion en verre (28) mobile entre une position dans laquelle elle couvre, et une position dans laquelle elle découvre, l'objet à marquer (36, 38, 40).

17. Une machine comme revendiquée en revendication 16, caractérisée en ce que la plaque de verre (28) est articulée sur le corps de la pince (10).
